# EUROPÄISCHE PATENTSCHRIFT

(11) **EP 0 581 109 B1**
(45) Veröffentlichungstag und Bekanntmachung des Hinweises auf die Patenterteilung: **08.11.1995**
(21) Anmeldenummer: 93111235.3
(22) Anmeldetag: 13.07.1993
(51) Int. Cl.: H02M 3/156

(54) **Schaltungsanordnung zum Ansteuern eines in einem Abwärtswandler angeordneten Schaltelements**
Circuit arrangement for controlling a switching element in a backregulator
Dispositif de circuit pour commander un élément de commutation dans un régulateur abaisseur de tension

(30) Priorität: 31.07.1992 DE 4225410
(43) Veröffentlichungstag der Anmeldung: 02.02.1994
(73) Patentinhaber: Siemens Nixdorf Informationssysteme Aktiengesellschaft, 33102 Paderborn (DE)
(72) Erfinder: Busch, Peter, Dipl.-Ing., D-86179 Augsburg (DE); Sterzik, Willi, Dipl.-Ing., D-86165 Augsburg (DE)
(74) Vertreter: Fuchs, Franz-Josef, Dr.-Ing.

(56) Entgegenhaltungen:
- US-A- 4 521 725

## Beschreibung

### Schaltungsanordnung zum Ansteuern eines in einem Abwärtswandler angeordneten Schaltelements

Die Erfindung betrifft eine Schaltungsanordnung zum Ansteuern eines in einem Abwärtswandler angeordneten Schaltelements gemäß dem Oberbegriff des Anspruchs 1.

Zum Ansteuern eines in einem Abwärtswandler angeordneten und zur Einregelung einer vorgegebenen Ausgangsspannung dienenden Schaltelements, das in einer positiven Versorgungsleitung des Abwärtswandlers angeordnet und an eine Steuerspannung angeschlossen ist, die auf ein wechselndes Potential bezogen ist, kann auf eine auf ein Massepotential bezogene Steuerspannung zurückgegriffen werden, die dem Schaltelement potentialgetrennt mit Hilfe einer Gegentaktendstufe und einem Ansteuerübertrager zugeführt wird. Eine zweite Möglichkeit ist, die auf das Massepotential bezogene Steuerspannung über einen vorgeschalteten Endverstärker zu leiten, der die auf das Massepotential bezogene Steuerspannung in eine Steuerspannung umwandelt, die auf das wechselnde Potential bezogen ist. Dabei wird der Endverstärker über eine sogenannte "Boot-strap"-Schaltung aus einer Hilfsspannungsquelle mit Energie versorgt und die von einem Schaltregler zur Verfügung gestellte, auf das Massepotential bezogene Steuerspannung dem Endverstärker über einen spannungsfesten Transistor zugeführt.

Unter "Bootstrap"-Schaltung ist eine Schaltungsmaßnahme zu verstehen, welche darin besteht, zwei Punkte wechselstrommäßig nahezu gleichen Potentials über einen Kondensator miteinander zu verbinden. Steigt die Spannung an einem der beiden Punkte an, dann folgt der zweite zwangsläufig nach (Elektronik Lexikon, Dr. Walter Baier, Franckh'sche Verlagshandlung Stuttgart, Stichwort: Bootstrap, Bootstrapping).

Der Nachteil der vorgenannten Ansteuermöglichkeiten ist, daß sie beide relativ aufwendig sind. Ein weiterer Nachteil insbesondere der zweiten Ansteuermöglichkeit ist, daß sie auch relativ störempfindlich gegenüber steilen Schaltflanken und Störimpulsen ist.

Aus dem Dokument US-A-4 521 725 ist eine Schaltungsanordnung zum Ansteuern eines in einem Abwärtswandler neben einer Speicherdrossel, einer Freilaufdiode und einem Ausgangskondensator angeordneten Schaltelements, das in einer positiven Versorgungsleitung des Abwärtswandlers angeordnet ist, bekannt. Das Schaltelement ist an eine Steuerspannung angeschlossen, die auf ein wechselndes Potential bezogen ist. Das wechselnde Potential ist gleichzeitig einem Bezugspotentialanschluß des Schaltelements zugeordnet.

Die gezeigte Schaltungsanordnung weist einen an sich mit Masse als Bezugsspannung arbeitenden Schaltregler auf, der einen Bezugspotentialeingang hat, der mit dem Bezugspotentialanschluß des Schaltelements zusammengeschaltet ist. Außerdem ist für eine Energieversorgung der Schaltregler mit einer Bootstrap-Schaltung verbunden, die auf eine negative Versorgungsleitung des Abwärtswandlers geschaltet ist.

Die beschriebene Schaltungsanordnung arbeitet mit einer aufwendigen Schaltung für die Rückkopplung eines Regelsignals und mit einem aufwendigen Vorregler für die Bewerkstelligung der Energieversorgung des Schaltreglers.

Aufgabe der Erfindung ist es deshalb, eine Schaltungsanordnung zum Ansteuern eines in einem Abwärtswandler in einer positiven Versorgungsleitung angeordneten Schaltelements anzugeben, die mit möglichst wenigen Bauteilen auskommt und störunanfällig arbeitet.

Diese Aufgabe wird erfindungsgemäß durch eine Schaltungsanordnung gelöst, die die kennzeichnenden Merkmale des Anspruchs 1 aufweist. Die sich danach ergebende Schaltungsanordnung benötigt weder eine Gegentaktendstufe mit Ansteuerübertrager noch einen Endverstärker, der eine Transformation eines Bezugspunktes einer Steuerspannung des Schaltelements durchführt. Sie kann dadurch gegenüber bisher einfacher aufgebaut werden. Erreicht wird dies dadurch, daß der Bezugspunkt eines an sich mit Masse als Bezugspotential arbeitenden Schaltreglers sowohl bezüglich seiner Energieversorgung als auch bezüglich der Zuführung einer Regelspannung, aus der er dann die Steuerspannung für das Schaltelement erzeugt, in eine feste Beziehung mit dem, ein wechselndes Potential aufweisenden Bezugspunkt des Schaltelements des Abwärtsreglers gesetzt wird. Ändert sich das Potential dieses Bezugspunktes, ändert sich entsprechend auch das Bezugspotential des Schaltreglers, so daß die vom Schaltregler erzeugte Steuerspannung für das Schaltelement stets in einer richtigen Relation zum Bezugspotential des Schaltelements steht.

Vorteilhafte Ausgestaltungen der Erfindung sind Gegenstand von Unteransprüchen. Danach ist eine Entkopplungsdiode für die Speicherdrossel des Abwärtswandlers und ein Widerstand zwischen dem Bezugspotentialanschluß des Schaltelements und dem Massepotential der Schaltungsanordnung vorgesehen, wodurch eine Absenkung des Bezugspotentials des Schaltelements auch in Phasen, in denen der Stromfluß durch die Speicherdrossel lückt, sicher gegeben ist.

In einer weiteren Ausgestaltungsmöglichkeit der Erfindung ist der Widerstand, der für die Absenkung des Bezugspotentials des Schaltelements in Phasen zuständig ist, in denen der Stromfluß durch die Speicherdrossel lückt, durch ein weiteres Schaltelement ersetzt. Durch Anpassung des Widerstandswertes in den jeweiligen Schaltzuständen des Schaltelements durch das weitere Schaltelement können Querströme, die das Bezugspotential des Schaltelements des Abwärtswandlers in Phasen, in denen das Schaltelement geöffnet hat, minimiert und damit ein Anheben des Bezugspotentials des Schaltelements verhindert werden. Die Schaltungsanordnung arbeitet damit noch sicherer.

Bei entsprechender Stromfestigkeit des weiteren Schaltelements kann das weitere Schaltelement eine Freilaufdiode des Abwärtswandlers ersetzen. Andererseits kann die Freilaufdiode den größten Anteil des Abmagnetisierungsstromes der Speicherdrossel übernehmen, so daß das weitere Schaltelement dann klein gehalten werden kann.

Nachfolgend wird die Erfindung anhand der in der Zeichnung dargestellten Ausführungsformen näher erläutert.

In der Zeichnung zeigen
Figur 1 eine Schaltungsanordnung zum Ansteuern eines Schaltelements eines Abwärtswandlers gemäß dem Stand der Technik in Prinzipdarstellung,
Figur 2 ein Ausführungsbeispiel einer Schaltungsanordnung zum Ansteuern eines Schaltelements eines Abwärtswandlers gemäß der Erfindung in Prinzipdarstellung und
Figur 3 einen Ausschnitt der Schaltungsanordnung gemäß Figur 2 mit einer Abänderung in Detaildarstellung,

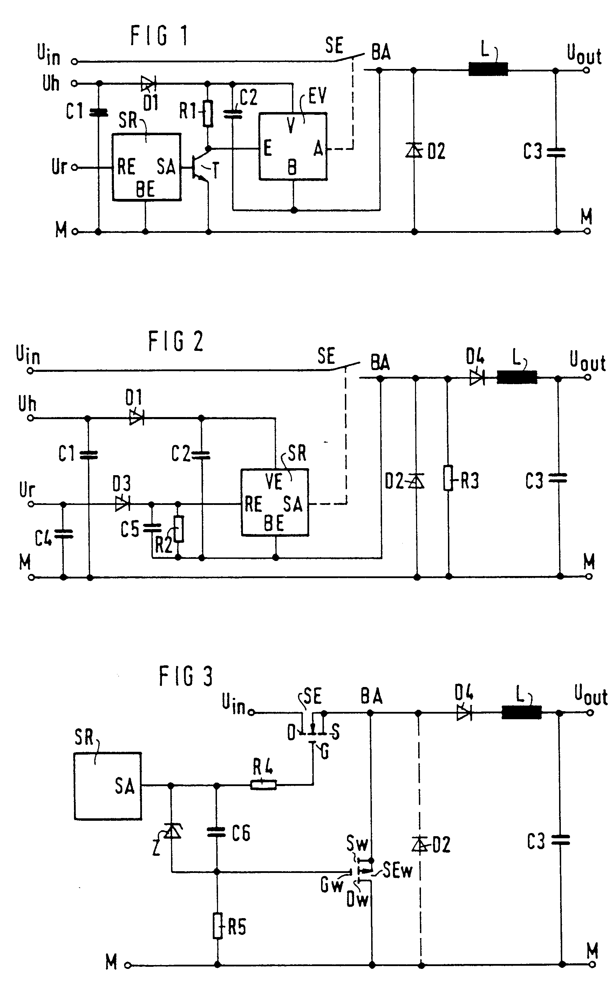

In der Figur 1 ist der prinzipielle Aufbau eines Abwärtswandlers zu sehen, der außer der Ansteuerschaltung durch ein Schaltelement SE, eine Speicherdrossel L, eine Freilaufdiode D2 und einen Ausgangskondensator C3 gebildet ist. Der Abwärtswandler weist eine positive Versorgungsleitung und eine negative Versorgungsleitung M auf. Eingangsseitig wird dem Abwärtswandler über die positive Versorgungsleitung eine Eingangsspannung Uin zugeführt, ausgangsseitig kann über die positive Versorgungsleitung eine Ausgangsspannung Uout abgegriffen werden, die kleiner als die Eingangsspannung Uin ist. Maßgebend für die Größe der Ausgangsspannung Uout ist das Tastverhältnis, mit der das Schaltelement SE geschaltet wird. Die negative Versorgungsleitung M verbindet den Eingang des Abwärtswandlers mit dem Ausgang. Sie führt das Massepotential der Schaltungsanordnung.

Das Schaltelement SE und die Speicherdrossel L, die zueinander in Reihe geschaltet sind, sind in der positiven Versorgungsleitung des Abwärtswandlers angeordnet. Sie sind in einer solchen Reihenfolge angeordnet, daß die Eingangsspannung Uin zuerst über das Schaltelement SE und dann über die Speicherdrossel L geführt wird. Nach der Speicherdrossel L kann die Ausgangsspannung Uout abgegriffen werden. Zwischen dem Schaltelement SE und der Speicherdrossel L befindet sich ein Anschlußpunkt für die Kathode der Freilaufdiode D2. Die Anode der Freilaufdiode D2 ist auf die negative Versorgungsleitung M geschaltet. Der Ausgangskondensator C3 befindet sich am Ausgang des Abwärtswandlers zwischen der positiven Versorgungsleitung und der negativen Versorgungsleitung M.

Der Abwärtswandler arbeitet nach dem Durchflußwandlerprinzip. Aufbau und Funktion eines solchen Wandlers ist beispielsweise aus: Otmar Kilgenstein, Schaltnetzteile in der Praxis, Vogel Buch-Verlag Würzburg, 1988, Seite 10, Bild 1.2 mit zugehörigen beschreibenden Kapiteln bekannt.

Zur Ansteuerung des Schaltelements SE weist die Schaltungsanordnung nach Figur 1 einen Schaltregler SR und einen Endverstärker EV auf. Der Schaltregler SR ist mit einem Bezugspotentialeingang BE mit der negativen Versorgungsleitung M verbunden. Der Schaltregler SR erzeugt aus einem Regelsignal, das in Form einer Regelspannung durch eine Regelspannungsquelle Ur an einem Regeleingang RE zur Verfügung gestellt wird, an einem Steuerausgang SA ein auf die negative Versorgungsleitung M bezogenes pulsweitenmoduliertes Steuersignal in Form einer entsprechenden Steuerspannung. Diese Steuerspannung wird über einen spannungsfesten Transistor T, hier ein npn-Transistor, an einen Eingang E des Endverstärkers EV geleitet.

Der Endverstärker EV ist mit einem Bezugspotentialeingang B mit einem Bezugspotentialanschluß BA des Schaltelementes SE verbunden. Bei dem Bezugspotentialanschluß BA handelt es sich hier um die ausgangsseitige Anschlußmöglichkeit des Schaltelements SE. Ein Versorgungseingang V des Endverstärkers EV ist über eine in Richtung des Endverstarkers gepolte Diode D1 an eine Hilfsspannungsquelle Uh angeschlossen. Der Versorgungseingang V des Endverstärkers EV ist außerdem über einen dritten Kondensator C2 mit seinem Bezugspotentialeingang B und über einen Widerstand R1 mit seinem Eingang E verbunden. Der Eingang E des Endverstärkers EV ist weiter mit dem Kollektor des spannungsfesten Transistors T verbunden, dessen Emitter auf die negative Versorgungsleitung M des Abwärtswandlers und dessen Basis auf den Steuereingang SA des Schaltreglers SR geführt ist. Ein Ausgang A des Endverstärkers, an dem die bezugspotentialtransformierte Steuerspannung für das Schaltelement SE ausgegeben wird, ist mit einem Steuereingang des Schaltelements SE verbunden. Diese Verbindung ist in der Figur 1 durch eine gestrichelte Linie angedeutet. Erwähnt wird noch, daß zwischen der Hilfsspannungsquelle Uh und der negativen Versorgungsleitung M des Abwärtswandlers ein vierten Kondensator C1 angeordnet ist.

Die schaltungstechnische Maßnahme, den Bezugspotentialeingang B des Endverstärkers EV über den dritten Kondensator C2 mit dem Versorgungseingang V des Endverstärkers EV zu verbinden und damit beide Eingänge von dem Potential am Bezugspotentialanschluß BA des Schaltelements SE abhängig zu machen, wird auch als "Bootstrapping" bezeichnet. Die mit dem vierten Kondensator C1 der zweiten Diode D1 und dem dritten Kondensator C2 gebildete Schaltung stellt eine Bootstrap-Schaltung für die Energieversorgung des Endverstärkers EV dar.

Die Regelspannungsquelle Ur ist in der Zeichnung nicht näher dargestellt. Es kann sich hierbei um einen Spannungsteiler handeln, der am Ausgang des Abwärtswandlers zwischen der positiven Versorgungsleitung und der negativen Versorgungsleitung M angeordnet ist und einen Mittelabgriff aufweist, an dem eine zur Ausgangsspannung Uout des Abwärtswandlers proportionale Regelspannung für den Schaltregler SR abgegriffen werden kann.

Die Schaltungsanordnung gemäß Figur 2 entspricht in ihrer Funktion der der Figur 1, weist aber den Endverstärker EV, den spannungsfesten Transistor T und den ersten Widerstand R1 nicht auf. Mit diesen Bauteilen fällt auch die störempfindliche Übertragung einer vom Schaltregler SR mit Bezugspunkt auf Masse erzeugten Steuerspannung weg. Die hier gewählte neue Art der Ansteuerung des Schaltelements SE ist problemloser, da nicht mehr eine schnell sich ändernde Steuerspannung sondern nurmehr eine langsam sich ändernde Regelspannung übertragen werden muß, um eine geeignete Steuerspannung zur Ansteuerung des Schaltelementes SE zu erhalten.

Gemäß der Figur 2 ist der Schaltregler SR, der an sich dafür konzipiert ist, eine pulsweitenmodulierte Ausgangsspannung bezogen auf ein Massepotential zu liefern, an die Stelle des Endverstärkers EV getreten, der aufgrund seiner Beschaltung nun ein Steuersignal bezogen auf den Augenblickswert eines wechselnden Bezugspotentials liefert. Bei dem wechselnden Bezugspotential handelt es sich um das Potential, das am Bezugspotentialanschluß BA des Schaltelements SE anliegt.

Wie vormals der Endverstärker EV ist der Schaltregler SR über den Bezugspotentialeingang BE mit dem Bezugspotentialanschluß BA des Schaltelements SE verbunden. Außerdem sind über den dritten Kondensator C2 ein Versorgungseingang VE und der Bezugspotentialeingang BE des Schaltreglers SR miteinander verbunden. Die übrige Beschaltung des Schaltreglers SR bezüglich der Energieversorgung entspricht der Beschaltung wie vormals beim Endverstärker EV.

Die Beschaltung des Schaltreglers SR bezüglich der Regelspannungszuführung ist dahingehend abgeändert, daß hierfür nun ebenfalls eine Bootstrap-Schaltung verwendet wird.

Im einzelnen ist der Regeleingang RE des Schaltreglers SR zum einen über eine Parallelschaltung aus einem ersten Kondensator C5 und einem ersten Widerstand R2 mit dem Bezugspotentialeingang BE und zum anderen über eine Serienschaltung aus einer in Richtung des Schaltreglers SR gepolten ersten Diode D3 und einem zweiten Kondensator C4 mit der negativen Versorgungsleitung M des Abwärtswandlers verbunden.

Bei durchgeschaltetem Schaltelement SE nimmt die Bezugsspannung des Schaltelements SE am Bezugsspannungsanschluß BA und damit auch am Bezugsspannungseingang BE des Schaltreglers SR einen Spannungswert entsprechend dem der Eingangsspannung Uin an. Bei gesperrt geschaltetem Schaltelement SE nimmt diese Bezugsspannung ungefähr den Wert 0 Volt an. Das Potential in diesen Punkten wechselt also in Abhängigkeit vom Schaltzustand des Schaltelements SE zwischen diesen Werten. Hierfür ist die Freilaufdiode D2 verantwortlich, die bei gesperrt geschaltetem Schaltelement SE durch den Endmagnetisierungsvorgang der Speicherdrossel L durchgeschaltet wird. Bei durchgeschaltetem Schaltelement SE sperrt die Freilaufdiode D2. Bei gesperrt geschaltetem Schaltelement SE werden die zweite Diode D1 und die erste Diode D3 leitend geschaltet. Dadurch wird aus der Hilfsspannungsquelle Uh der dritte Kondensator C2 geladen, der die Spannungsversorgung des Schaltreglers SR sicherstellt. Außerdem wird der erste Kondensator C5 geladen, der die Spannung der Regelspannungsquelle Ur als Meßprobe an den Schaltregler SR überträgt. Beim Durchschalten des Schaltelements SE werden die Spannungen des dritten und ersten Kondensators C2 und C5 um die Eingangsspanung Uin angehoben. Da es sich bei der Regelspannung der Regelspannungsquelle Ur um eine sich langsam verändernde Regelgröße handelt, ist diese Art der Übertragung und Speicherung in einem Kondensator möglich.

Der Schaltregler SR vergleicht die am Regeleingang RE anliegende Spannung mit einem internen Sollwert und regelt daraufhin das Tastverhältnis der Spannungsimpulse der an seinem Steuerausgang SA bereitgestellten Steuerspannung.

Zum Sicherstellen, daß die Schaltungsanordnung auch noch funktioniert, wenn der Strom durch die Speicherdrossel L lückt, ist hier vor die Speicherdrossel L eine in Richtung der Speicherdrossel L gepolte vierte Diode D4, eine sogenannte Entkopplungsdiode, geschaltet und ist zwischen dem Bezugspotentialanschluß BA des Schaltelements SE und der negativen Versorgungsleitung M ein zweiter Widerstand R3 angeordnet. Die vierte Diode D4 stellt sicher, daß bei stromloser Speicherdrossel L das Bezugspotential am Bezugspotentialeingang BE des Schaltreglers SR 0 Volt annimmt. Ohne der vierten Diode D4 und dem zweiten Widerstand R3 würde bei einer längeren Tastverhältnispause der Steuerspannung dieses Bezugspotential einen Spannungswert entsprechend dem der Ausgangsspannung Uout annehmen, wodurch die Ladungen des dritten und ersten Kondensators C2 und C5 nicht mehr aufgefrischt werden würden. Die Schaltungsanordnung wäre dann funktionsunfähig.

In der Figur 3 ist der zweite Widerstand R3 durch ein weiteres Schaltelement SEw ersetzt, bei dem es sich um einen P-Kanal-MOS-Feldeffekttransistor handelt. Der Source-Anschluß Sw dieses Transistors ist mit dem Bezugspotentialanschluß BA des Schaltelementes SE verbunden, während der Drain-Anschluß Dw mit der negativen Versorgungsleitung M verbunden ist. Die Ansteuerung erfolgt ausgehend vom Steuerausgang SA des Schaltreglers SR über eine Parallelschaltung aus einer Zenerdiode Z und einem sechsten Kondensator C6, die mit dem Gate-Anschluß Gw und weiter über einen fünften Widerstand R5 mit der negativen Versorgungsleitung M verbunden ist.

Das weitere Schaltelement SEw schaltet konträr zum Schaltelement SE, das hier als N-Kanal-MOS-Feldeffekttransistor ausgebildet ist. Bei diesem Transistor liegt die Eingangsspannung Uin am Drain-Anschluß D an. Der zugehörige Source-Anschluß S bildet den Bezugspotentialanschluß BA des Schaltelements SE. Die Ansteuerung dieses Transistors über den Gate-Anschluß G erfolgt ausgehend vom Steuerausgang SA des Schaltreglers SR über einen vierten Widerstand R4.

Bei gesperrt geschaltetem Schaltelement SE schaltet das weitere Schaltelement SEw durch und legt das Potential am Bezugspotentialanschluß BA auf das Massepotential der negativen Versorgungsleitung M. Diese Funktion entspricht der Funktion der Freilaufdiode D2 in dieser Phase unter der Voraussetzung, daß der zu diesem Zeitpunkt dann laufende Abmagnetisierungsprozeß der Speicherdrossel L und damit der Stromfluß durch die Speicherdrossel L noch nicht abgeschlossen ist. Ist die Abmagnetisierung und daher der Stromfluß beendet, wird das Massepotential der negativen Versorgungsleitung M nicht mehr über die Freilaufdiode D2, sondern über das weitere Schaltelement SEw bewerkstelligt. Die vierte Diode D4 verhindert dabei, daß die Ausgangsspannung Uout das Potential am Bezugspotentialanschluß BA wieder ansteigt. Ist das Schaltelement SE durchgeschaltet, sperrt das weitere Schaltelement SEw wie auch die Freilaufdiode D2.

Da die Funktion des weiteren Schaltelements SEw insgesamt der Funktion der Freilaufdiode D2 entspricht, könnte die Freilaufdiode D2 auch entfallen, was durch gestrichelte Anschlußleitungen der Freilaufdiode D2 angedeutet ist. Wird sie trotzdem eingesetzt, kann sie den größten Teil des Abmagnetisierungsstroms der Speicherdrossel L übernehmen, so daß das weitere Schaltelement SEw nur noch die Aufgabe hat, in den betreffenden Phasen das Potential am Bezugspotentialanschluß BA auf dem Massepotential zu halten. Das weitere Schaltelement SEw kann in diesem Fall dann leistungsschwach bzw. klein ausgebildet sein.

## Patentansprüche

1. Schaltungsanordnung zum Ansteuern eines in einem Abwärtswandler neben einer Speicherdrossel (L), einer Freilaufdiode (D2) und einem Ausgangskondensator (C3) angeordneten Schaltelements (SE), das in einer positiven Versorgungsleitung des Abwärtswandlers angeordnet und an eine Steuerspannung angeschlossen ist, die auf ein wechselndes Potential bezogen ist, das gleichzeitig einem Bezugspotentialanschluß (BA) des Schaltelements (SE) zugeordnet ist, der mit einem Bezugspotentialeingang (BE) eines an sich mit Masse als Bezugspotential arbeitenden Schaltreglers (SR) zusammengeschaltet ist, der für eine Energieversorgung des Schaltreglers (SR) mit einer "Bootstrap"-Schaltung (D1, C1, C2) verbunden ist, die auf eine negative Versorgungsleitung des Abwärtswandlers geschaltet ist,
**dadurch gekennzeichnet,**
daß sowohl für die Energieversorgung des Schaltreglers (SR) aus einer Hilfsspannungsquelle (Uh) als auch für eine Übertragung einer für die Ableitung der Steuerspannung des Schaltelements (SE) durch den Schaltregler (SR) maßgebenden Regelspannung aus einer Regelspannungsquelle (Ur) an den Schaltregler (SR) jeweilige "Bootstrap"-Schaltungen (C1, D1, C2; R2, C5, D3, C4) angeschlossen sind, die auf die negative Versorgungsleitung (M) des Abwärtswandlers geschaltet sind,
daß in der "Bootstrap"-Schaltung für die Übertragung der Regelspannung an den Schaltregler (SR) ein Regelspannungseingang (RE) des Schaltreglers (SR) zum einen über eine Parallelschaltung aus einem ersten Kondensator (C5) und einem ersten Widerstand (R2) mit dem Bezugspotentialeingang (BE) des Schaltreglers (SR) und zum anderen über eine Serienschaltung aus einer in Richtung des Schaltreglers (SR) gepolten ersten Diode (D3) und einem zweiten Kondensator (C4) mit der negativen Versorgungsleitung (M) des Abwärtswandlers verbunden ist, daß in der "Bootstrap"-Schaltung für die Energieversorgung des Schaltreglers (SR) ein Versorgungseingang (VE) des Schaltreglers (SR) zum einen über einen dritten Kondensator (C2) mit dem Bezugspotentialeingang (BE) des Schaltreglers (SR) und zum anderen über eine Serienschaltung aus einer in Richtung des Schaltreglers (SR) gepolten zweiten Diode (D1) und einem vierten Kondensator (C1) mit der negativen Versorgungsleitung (M) des Abwärtswandler verbunden ist, und daß ein Mittelabgriff zwischen der ersten Diode (D3) und dem zweiten Kondensator (C4) mit der Regelspannungsquelle (Ur) und ein Mittelabgriff zwischen der zweiten Diode (D1) und dem vierten Kondensator (C1) mit der Hilfsspannungs quelle (Uh) verbunden sind.

2. Schaltungsanordnung nach Anspruch 1
**dadurch gekennzeichnet,**
daß zur Speicherdrossel (L) des Abwärtswandlers eine Entkopplungsdiode (D4) in Serie geschaltet und ein zweiter Widerstand (R3) zwischen dem Bezugspotentialanschluß (BA) des Schaltelements (SE) und der negativen Versorgungsleitung (M) des Abwärtswandlers angeordnet ist.

3. Schaltungsanordnung nach Anspruch 1,
**dadurch gekennzeichnet**,
daß zur Speicherdrossel (L) des Abwärtswandlers eine Entkopplungsdiode (D4) in Serie geschaltet und ein parallel zum Schaltelement (SE) angesteuertes, konträr zum Schaltelement (SE) schaltendes weiteres Schaltelement (SEw) zwischen dem Bezugspotentialanschluß (BA) des Schaltelements (SE) und der negativen Versorgungsleitung (M) des Abwärtswandlers angeordnet ist.

4. Schaltungsanordnung nach Anspruch 3
**dadurch gekennzeichnet**,
daß das weitere Schaltelement (SEw) eine Stromfestigkeit in dem Maß aufweist, daß der Diodenstrom der Freilaufdiode (D2) von dem weiteren Schaltelement (SEw) übernommen und dadurch die Freilaufdiode (D2) eingespart werden kann.

## Claims

1. Circuit arrangement for driving a switching element (SE) which is arranged in a step-down converter as well as an energy-storage inductor (L), a freewheeling diode (D2) and an output capacitor (C3), is arranged in a positive line of the step-down converter and is connected to a control voltage which is related to a changing potential which is at the same time assigned to a reference-earth potential connection (BA) of the switching element (SE), which reference-earth potential connection (BA) is connected to a reference-earth potential input (BE) of a switched-mode regulator (SR) which intrinsically operates with earth as the reference-earth potential and is connected to a bootstrap circuit (D1, C1, C2) for supplying energy to the switched-mode regulator (SR), which bootstrap circuit (D1, C1, C2) is connected to a negative supply line of the step-down converter, characterized in that bootstrap circuits (C1, D1, C2; R2, C5, D3, C4) which are connected to the negative supply line (M) of the step-down converter, are in each case connected to the switched-mode regulator (SR) both for supplying energy to the switched-mode regulator (SR) from an auxiliary voltage source (Uh) and for transmitting a regulating voltage, which governs the derivation of the control voltage of the switching element (SE) by the switched-mode regulator (SR), from a regulating voltage source (Ur), in that a regulating voltage input (RE) of the switched-mode regulator (SR) is connected on the one hand to the reference-earth potential input (BE) of the switched-mode regulator (SR) via a parallel circuit formed from a first capacitor (C5) and a first resistor (R2) and, on the other hand, is connected to the negative supply line (M) of the step-down converter via a series circuit formed from a first diode (D3), whose polarity is in the direction of the switched-mode regulator (SR), and a second capacitor (C4) in the bootstrap circuit for transmitting the regulating voltage to the switched-mode regulator (SR), in that a supply input (VE) of the switched-mode regulator (SR) is connected on the one hand to the reference-earth potential input (BE) of the switched-mode regulator (SR) via a third capacitor (C2) and, on the other hand, is connected to the negative supply line (M) of the step-down converter via a series circuit formed from a second diode (D1), whose polarity is in the direction of the switched-mode regulator (SR), and a fourth capacitor (C1) in the bootstrap circuit for supplying energy to the switched-mode regulator (SR), and in that a centre tap between the first diode (D3) and the second capacitor (C4) is connected to the control voltage source (Ur), and a centre tap between the second diode (D1) and the fourth capacitor (C1) is connected to the auxiliary voltage source (Uh).

2. Circuit arrangement according to Claim 1, characterized in that a decoupling diode (D4) is connected in series with the energy-storage inductor (L) of the step-down converter, and a second resistor (R3) is arranged between the reference-earth potential connection (BA) of the switching element (SE) and the negative supply line (M) of the step-down converter.

3. Circuit arrangement as claimed in Claim 1, characterized in that a decoupling diode (D4) is connected in series with the energy-storage inductor (L) of the step-down converter, and a further switching element (SEw), which is driven in parallel with the switching element (SE) and switches counter to the switching element (SE), is arranged between the reference-earth potential connection (BA) of the switching element (SE) and the negative supply line (M) of the step-down converter.

4. Circuit arrangement according to Claim 3, characterized in that the further switching element (SEw) has a current-carrying capacity such that the diode current of the freewheeling diode (D2) can be taken over by the further switching element (SEw) and, in consequence, the freewheeling diode (D2) can be saved.

## Revendications

1. Montage de commande d'un élément de commutation (SE), qui est disposé dans un convertisseur abaisseur en plus d'une self d'accumulation (L), d'une diode de roue libre (D2) et d'un condensateur de sortie (C3) et qui est disposé dans une ligne d'alimentation positive du convertisseur abaisseur et qui est porté à une tension de commande rapportée à un potentiel alternatif associé simultanément à une borne de potentiel de référence (BA) de l'élément de commutation (SE), laquelle borne est interconnectée à une entrée de potentiel de référence (BE) d'un régulateur de commutation (SR), qui fonctionne en soi avec la masse comme potentiel de référence et qui est relié, pour une alimentation en énergie du régulateur de commutation (SR), à un circuit "bootstrap" (D1,C1,C2), raccordé à une ligne d'alimentation négative du convertisseur abaisseur,
caractérisé par le fait
qu'aussi bien pour l'alimentation en énergie du régulateur de commutation (SR) à partir d'une source de tension auxiliaire (Uh) que, également pour une transmission d'une tension de régulation, qui est déterminante pour l'obtention de la tension de commande de l'élément de commutation (SE) au moyen du régulateur de commutation (SR), à partir d'une source de tension de régulation (Ur), des circuits "bootstrap" (C1,D1,C2; R2,C5,D3,C4), qui sont raccordés à la ligne d'alimentation négative (M) du convertisseur abaisseur, sont connectés au régulateur (SR) de commutation,
que dans le circuit "bootstrap" pour la transmission de la tension de régulation au régulateur de commutation (SR) une entrée de tension de régulation (RE) du régulateur de commutation (SR) est reliée d'une part par l'intermédiaire d'un circuit parallèle formé d'un premier condensateur (C5) et d'une première résistance (R2), à l'entrée de potentiel de référence (BE) du régulateur de commutation (SR) et d'autre part, par l'intermédiaire d'un circuit série formé d'une première diode (D3) polarisée dans la direction du régulateur de commutation (SR) et d'un second condensateur (C4), à la ligne d'alimentation négative (M) du convertisseur abaisseur, que dans le circuit "bootstrap" pour l'alimentation en énergie du régulateur de commutation (SR), une entrée d'alimentation (VE) du régulateur de commutation (SR) est reliée d'une part par l'intermédiaire d'un troisième condensateur (C2) à l'entrée de potentiel de référence (BE) du régulateur de commutation (SR) et d'autre part, par l'intermédiaire d'un circuit série formé d'une seconde diode (D1) polarisée en direction du régulateur de commutation (SR) et d'un quatrième condensateur (C1), à la ligne d'alimentation négative (M) du convertisseur abaisseur, et qu'une prise médiane se situant entre la première diode (D3) et le second condensateur (C4) est reliée à la source de tension de régulation (Ur) et qu'une prise médiane située entre la seconde diode (D1) et le quatrième condensateur (C1) est reliée à la source de tension auxiliaire (Uh).

2. Montage suivant la revendication 1, caractérisé par le fait qu'une diode de découplage (D4) est branchée en série avec la self d'accumulation (L) du convertisseur abaisseur et qu'une seconde résistance (R3) est disposée entre la borne de potentiel de référence (BA) de l'élément de commutation (SE) et la ligne négative d'alimentation (M) du convertisseur abaisseur.

3. Montage suivant la revendication 1, caractérisé par le fait qu'une diode de découplage (D4) est branchée en série avec la self d'accumulation (L) du convertisseur abaisseur et qu'un autre élément de commutation (SEw), qui est commandé en parallèle avec l'élément de commutation (SE) et commute en sens opposé de l'élément de commutation (SE), est disposé entre la borne (BA) de potentiel de référence de l'élément de commutation (SE) et la ligne d'alimentation négative (M) du convertisseur abaisseur.

4. Montage suivant la revendication 3, caractérisé par le fait que l'autre élément de commutation (SEw) a une résistance au courant telle que le courant de la diode de roue libre (D2) peut être pris en charge par l'autre élément de commutation (SEw) et que, de ce fait, on peut faire l'économie de la diode de roue libre (D2).
